(19)

Europäisches Patentamt

European Patent Office

Office européen des brevets

(11) **EP 2 827 410 B1**

(12) **EUROPEAN PATENT SPECIFICATION**

(45) Date of publication and mention
of the grant of the patent:
**16.01.2019 Bulletin 2019/03**

(21) Application number: **14162414.8**

(22) Date of filing: **28.03.2014**

(51) Int Cl.:
*H01M 4/131* (2010.01)     *H01M 4/1391* (2010.01)
*H01M 4/485* (2010.01)     *H01M 4/505* (2010.01)
*H01M 4/525* (2010.01)     *H01M 10/052* (2010.01)
*C01G 53/04* (2006.01)     *C01F 7/00* (2006.01)
*H01M 4/04* (2006.01)     *H01M 4/02* (2006.01)
*H01M 4/62* (2006.01)

(54) **Positive active material for rechargeable lithium battery, and positive electrode and rechargeable lithium battery including the same**

Positives Aktivmaterial für wiederaufladbare Lithiumbatterie und wiederaufladbare Lithiumbatterie damit

Matériau actif positif pour batterie au lithium rechargeable et électrode positive et batterie au lithium rechargeable l'incluant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2013   US 201361856503 P**
**11.12.2013   US 201314103046**

(43) Date of publication of application:
**21.01.2015   Bulletin 2015/04**

(73) Proprietor: **Samsung SDI Co., Ltd.**
**Yongin-si, Gyeonggi-do (KR)**

(72) Inventors:
• **Ishida, Sumihito**
  **Gyeonggi-do (KR)**
• **An, Jung-Woo**
  **Gyeonggi-do (KR)**
• **Kim, Young-Kee**
  **Gyeonggi-do (KR)**
• **Jeoung, Jin-Man**
  **Gyeonggi-do (KR)**

(74) Representative: **Mounteney, Simon James**
**Marks & Clerk LLP**
**90 Long Acre**
**London**
**WC2E 9RA (GB)**

(56) References cited:
**WO-A1-2013/047569     US-B2- 7 192 672**

**Description**

**BACKGROUND**

**1. Field**

A positive active material for a rechargeable lithium battery and a positive electrode and rechargeable lithium battery including the same are disclosed.

**2. Description of the Related Art**

In recent times, due to reductions in size and weight of a portable electronic equipment, there has been a need to develop rechargeable lithium batteries for the portable electronic equipment having both high performance and large capacity.

Such a rechargeable lithium battery is manufactured by injecting an electrolyte into a battery cell, which includes a positive electrode including a positive active material capable of intercalating/deintercalating lithium ions and a negative electrode including a negative active material capable of intercalating/deintercalating lithium ions.

US 7 192 672 B2 describes a $LiCoO_2$ powder, having a tap density of 0.78 g/cm$^3$ that was used as positive electrode active material for a lithium secondary battery. The powder is formed by agglomeration of primary particles. WO 2013/047569 A1 discloses a lithium metal complex oxide comprising secondary particles and having a tapped density of 0.9 g/ml.

As for the positive active material, $LiCoO_2$ has been widely used but has a problem of a high manufacturing cost and an unstable supply due to scarcity of cobalt (Co). Accordingly, a low-cost positive active material using Ni (nickel) or Mn (manganese) has been researched.

**SUMMARY**

One embodiment provides positive active material for a rechargeable lithium battery having high power characteristics, and excellent cycle-life characteristics during charge and discharge with high power.

Another embodiment provides a positive electrode for a rechargeable lithium battery including the positive active material for a rechargeable lithium battery.

Yet another embodiment provides a rechargeable lithium battery including the positive active material for a rechargeable lithium battery.

One embodiment provides a positive active material for a rechargeable lithium battery including a porous material having a tap density of greater than or equal to 0.3 g/cc and less than 1.0 g/cc.

The porous material may preferably include a primary particle and a secondary particle including the aggregated primary particle, an average particle diameter (D50) of the primary particle may range from 50 to 300 nm, and an average particle diameter (D50) of the secondary particle may range from 2 to 7 μm.

The porous material may preferably include at least one selected from compound represented by the following Chemical Formulae 1 to 3.

$$[\text{Chemical Formula 1}] \qquad LiMn_{2-x}M^1_xO_4$$

(In Chemical Formula 1, $M^1$ is Mg, Na, Ca, Sr, Ti, Al, Co, Ni, Fe, Cu, Si, Sn, or a combination thereof, and $0 \leq x < 2$.)

$$[\text{Chemical Formula 2}] \qquad LiNi_aCo_bMn_cM^2_dO_4$$

(In Chemical Formula 2, $M^2$ is Mg, Na, Ca, Sr, Ti, Al, Fe, Cu, Si, Sn, or a combination thereof, $0<a<1$, $0<b<1$, $0<c<1$, $0 \leq d<1$, and $a+b+c+d=1$.)

$$[\text{Chemical Formula 3}] \qquad LiNi_eCo_fAl_gM^3_hO_4$$

(In Chemical Formula 3, $M^3$ is Mg, Na, Ca, Sr, Ti, Mn, Fe, Cu, Si, Sn, or a combination thereof, $0<e<1$, $0<f<1$, $0<g<1$, $0 \leq h<1$, and $e+f+g+h=1$.)

The positive active material may preferably further include activated carbon, and the activated carbon may be included in an amount of 2 to 10 wt% based on the total amount of the positive active material.

Another embodiment provides a positive electrode for a rechargeable lithium battery including the positive active material.

The positive electrode may preferably have an active mass density of 1.5 to 3.0 g/cc.

Yet another embodiment provides a rechargeable lithium battery including the positive electrode including a positive active material; a negative electrode including a negative active material; and an electrolyte solution.

The negative active material may preferably include amorphous carbon.

The separator may include cellulose.

Other embodiments are included in the following detailed description.

A rechargeable lithium battery having high power characteristics and excellent cycle-life characteristics during charge and discharge with high power may be realized.

## BRIEF DESCRIPTION OF THE DRAWING

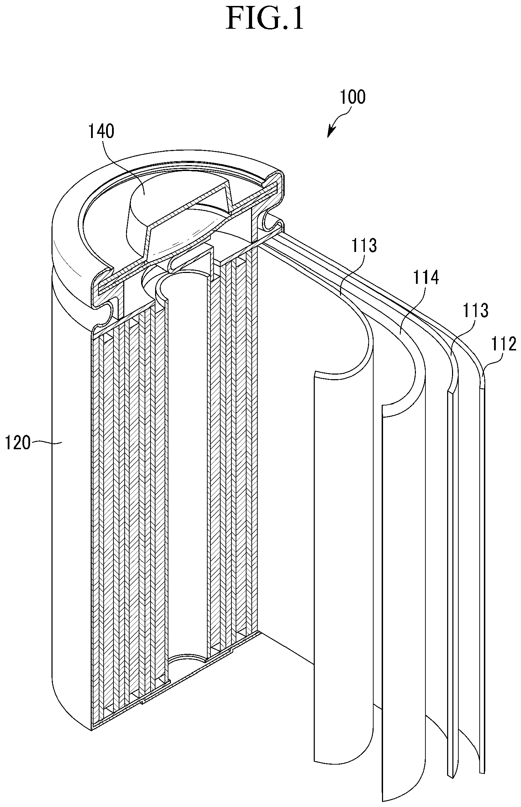

FIG. 1 is a schematic view of a rechargeable lithium battery according to one embodiment.

### <Description of Symbols>

100: rechargeable lithium battery
112: negative electrode
113: separator
114: positive electrode
120: battery case
140: sealing member

## DETAILED DESCRIPTION

Hereinafter, embodiments are described in detail. However, these are preferred embodiments, and this disclosure is not limited thereto.

A positive active material for a rechargeable lithium battery according to one embodiment includes a porous material having pores.

The present invention according to claim 1 provides a positive active material for a rechargeable lithium battery including a porous material having a tap density of greater than or equal to 0.30 g/cc and less than 1.0 g/cc, wherein the porous material comprises primary particles and secondary particles, wherein each secondary particle comprises aggregated primary particles, optionally the tap density is greater than or equal to 0.45 g/cc and less than 0.95 g/cc and optionally greater than or equal to 0.55 g/cc and less than 0.90 g/cc.

In an embodiment, the porous material may have a tap density of greater than or equal to 0.3 g/cc and less than 1.0 g/cc, and specifically greater than or equal to 0.6 g/cc and less than 0.9 g/cc. When the porous material having a tap density within the range of the present invention was used, lithium ions are actively diffused and thus, may decrease internal resistance of a positive electrode and improve high power characteristics of a rechargeable lithium battery.

The tap density indicates density of the total volume of the porous material. The tap density is measured according to the following method.

A 100 cc cell is filled by naturally dropping a specimen of the porous material with a mesh of mesh size of 200 (0.0704 mm), after measuring mass (A) of the cell. Subsequently, mass (B) and charge volume (D) of the porous material after 200 times tapping by using a device equipped with a spacer (Tap Denser KYT-3000, available from Seishin Enterprise Co., Ltd. and used to calculate a tap density according to the following Equation 1.

$$[Equation\ 1]$$

$$Tap\ density\ (g/cc) = (B\text{-}A)\ /\ D$$

The porous material may have a pore shape adjusted by controlling a ratio between a true density and a tap density. The porous material having a controlled pore shape may further improve output characteristics of a rechargeable lithium battery.

The porous material has a ratio of the tap density relative to a true density of less than or equal to 1/5, optionally between 1/5 and 1/8, and or greater than or equal to 1/6 and less than or equal to 1/5, more specifically greater than or equal to 1/7 and less than or equal to 1/5. When the porous material having a ratio adjusted within the range, lithium ions are more actively diffused and thus may decrease internal resistance of a positive electrode and further improve high power characteristics of a rechargeable lithium battery.

The true density indicates a density of the volume of a material itself in the porous material, that is, a density of the volume excepting the pores in the porous material.

This true density is measured in a vapor exchange method. Referring to the vapor exchange method, the volume of a sample is obtained by changing the volume of gas such as He and a pressure at a predetermined temperature, and a density of the sample is measured from the volume and weight of the sample. Herein, the measurement is performed by using a device, Accupyc1330 pycnometer made by Shimadzu Co.

The porous material may include primary particles and secondary particles agglomerated by the primary particles. The size of the primary or secondary particles may be adjusted, and thus output characteristics of a rechargeable lithium battery may be improved.

For example, an average particle diameter (D50) of the primary particle may range from 50 to 300 nm, optionally from 60 to 200 nm and optionally from 70 to 150 nm and specifically from 100 to 200 nm. When the primary particle has a size adjusted within the range, lithium ions are more actively diffused and thus, may further decrease internal resistance of a positive electrode and improve high power characteristics of a rechargeable lithium battery.

Herein, the D50 denotes a particle diameter corresponding to 50 volume% of a cumulative volume in a particle diameter distribution, and the average particle diameter (D50) of the primary particles may be measured by using S4500 scanning electron microscope made by Hitachi Ltd.

An average particle diameter (D50) of the secondary particle may range from 2 to 7 $\mu$m, and specifically from 3 to 5 $\mu$m. For example, 2.0 to 7.0 $\mu$m, optionally from 2.5 to 5.5 $\mu$m and optionally from 3.0 to 4.5 $\mu$m. When the secondary particle has a particle size adjusted within the range, lithium ions may be more actively diffused and thus, decrease internal resistance of a positive electrode and further improve high power characteristics of a rechargeable lithium battery.

Herein, the D50 denotes a particle diameter corresponding to 50 volume% of a cumulative volume in a particle distribution, and the average particle diameter (D50) of the secondary particles maybe measured by using LA-910 laser diffraction particle size analyzer made by Horiba International Co.

The porous material may be at least one selected from compounds represented by the following Chemical Formulae 1 to 3.

[Chemical Formula 1]     $LiMn_{2-x}M^1{}_xO_4$

(In Chemical Formula 1, $M^1$ is Mg, Na, Ca, Sr, Ti, Al, Co, Ni, Fe, Cu, Si, Sn, or a combination thereof, and $0 \leq x < 2$.)

The compound represented by the above Chemical Formula 1 may be a lithium manganese oxide, or a lithium manganese oxide in which a metal of $M^1$ is doped.

[Chemical Formula 2]     $LiNi_aCo_bMn_cM^2{}_dO_4$

(In Chemical Formula 2, $M^2$ is Mg, Na, Ca, Sr, Ti, Al, Fe, Cu, Si, Sn, or a combination thereof, $0 < a < 1$, $0 < b < 1$, $0 < c < 1$, $0 \leq d < 1$, and $a+b+c+d=1$.)

The compound represented by the above Chemical Formula 2 may be a lithium nickel cobalt manganese oxide, or a lithium nickel cobalt manganese oxide in which a metal of $M^2$ is doped.

[Chemical Formula 3]     $LiNi_eCo_fAl_gM^3{}_hO_4$

(In Chemical Formula 3, $M^3$ is Mg, Na, Ca, Sr, Ti, Mn, Fe, Cu, Si, Sn, or a combination thereof, $0 < e < 1$, $0 < f < 1$, $0 < g < 1$, $0 \leq h < 1$, and $e+f+g+h=1$.)

The compound represented by the above Chemical Formula 3 may be a lithium nickel cobalt aluminum oxide, or a lithium nickel cobalt aluminum oxide in which a metal of $M^3$ is doped.

In an embodiment of the present invention, preferably x, h and d in the above formulae are each independently $0 \leq d$, x, $h < 0.1$, $0 \leq d$, x, $h < 0.05$, $0.005 \leq d$, x, $h < 0.02$, or $0.0075 \leq d$, x, $h < 0.0.015$.

In an embodiment of the present invention, preferably a, b and c and e, f and g in the above formulae are each independently from 0.10 to 0.70, 0.20 to 0.50, or 0.25 to 0.40.

When a compound doped with each metal $M^1$ to $M^3$ in the above Chemical Formulae 1 to 3 is used, the material may be suppressed from structure change such as partially crystal collapse and further improve cycle-life characteristics during charge and discharge with high power.

In an embodiment the porous material may be prepared by mixing a metal raw material and ammonium hydroxide ($NH_4OH$) or sodium hydroxide (NaOH) to prepare a mixed solution, mixing the mixed solution with a lithium raw material, and heat-treating the mixture.

In an alternative embodiment the porous material may be prepared by a process comprising mixing a metal raw material and a hydroxide salt to prepare a mixed solution, obtaining composite hydroxide particles from the mixed solution, mixing the particles with a lithium raw material, and heat-treating the mixture.

In this embodiment the hydroxide salt may be ammonium hydroxide ($NH_4OH$) or sodium hydroxide (NaOH).

In this embodiment the process further comprises drying the composite hydroxide particles prior to mixing with the lithium raw material, optionally drying at 80°C to 120°C.

In an embodiment, the weight ratio of composite hydroxide particles and lithium raw material is 1:1.01 to 1:1.10 and optionally 1:1.02 to 1:1.06.

In an embodiment, wherein the hydroxide salt is added until the pH of the solution is between 9 and 13, optionally between 10 and 12

In an embodiment, the process further comprises the addition of a complex agent to the metal raw material prior to addition of the hydroxide salt, preferably the complex agent is ammonium sulfate aqueous solution.

The metal raw material may preferably be a metal-containing acetate, nitrate, hydroxide, oxide, sulfate, and the like, but is not limited thereto. The metal may be a metal in the above Chemical Formulae 1 to 3.

The lithium raw material may preferably be lithium carbonate, lithium acetate, lithium hydroxide, and the like.

In an embodiment, the composite hydroxide particles and the lithium raw material are mixed with a raw material for Mg, Na, Ca, Sr, Ti, Mn, Fe, Cu, Si, Sn, or a combination thereof. In an embodiment the raw material may preferably be a metal-containing acetate, nitrate, hydroxide, oxide, sulfate, and the like, but is not limited thereto, preferably a hydroxide. In an embodiment the raw material comprises magnesium, preferably magnesium hydroxide. In an embodiment of the present invention the raw material is mixed with the lithium carbonate and the composite hydroxide particles so that the mole ratio of the metal in the raw material is from 0.5% to 5%, preferably 0.75% to 2%, based on the total mole content of metals in the lithium raw material, the composite hydroxide particles and metal in the raw material. In an embodiment of the present invention $M^1$, $M^2$ or $M^3$ in Chemical Formulae 1 to 3 may be provided by mixing the composite hydroxide particles and the lithium raw material and mixed with a raw material comprising $M^1$, $M^2$ or $M^3$.

The tap density, true density, and particle size of the porous material may be adjusted by controlling a heat treatment temperature.

For example, the heat treatment may be performed at 600 to 1200°C, specifically 600 to 1100 °C, specifically 600 to 1000 °C, specifically, 800 to 1000 °C, and more specifically, 900 to 1000 °C. When the heat treatment is performed within the temperature range, the tap density, true density, and particle size of the porous material are adjusted within an appropriate range, obtaining high power characteristics of a rechargeable lithium battery.

In an embodiment of the present invention, the heat treatment step may be carried out for between 8 and 13 hours, optionally between 9 and 11 hours.

In a preferred embodiment of the present invention, the heat treatment step may be carried out for between 9 and 11 hours at 700 to 1100 °C, preferably at 900 to 1100 °C, more preferably for between 925 to 975°C, or preferably at 780 to 850 °C.

In addition, the tap density and particle size may be adjusted by controlling a mixing ratio among the raw materials to promote a synthesis reaction.

The weight ratio of composite alkaline particles and lithium raw material may be 1:1.01 to 1:1.10, and specifically 1:1.02 to 1:1.06.

The positive active material may be activated carbon along with the porous material. When the activated carbon is used with the porous material, buffering effects due to absorption/desorption of lithium ions or fluorophosphate ions may further improve cycle-life characteristics during charge and discharge with high power and specifically, cycle-life characteristics at a low temperature.

The activated carbon may be included in an amount of 2 to 10 wt%, and specifically 4 to 6 wt% based on the total amount of the positive active material, specifically the total amount of the porous material and the activated carbon. When the activated carbon is included within the amount range, cycle-life characteristic during charge and discharge with high power and specifically, cycle-life characteristic at a low temperature may be further improved.

Hereinafter, a rechargeable lithium battery including the positive active material is illustrated referring to FIG. 1.

FIG. 1 is a schematic view showing the lithium rechargeable battery according to one embodiment.

Referring to FIG. 1, a rechargeable lithium battery 100 according to one embodiment includes an electrode assembly including a positive electrode 114, a negative electrode 112 facing the positive electrode 114, a separator 113 interposed between the negative electrode 112 and the positive electrode 114, an electrolyte solution (not shown) impregnating the separator 113, a battery case 120 including the electrode assembly, and a sealing member 140 sealing the battery case 120.

The positive electrode 114 includes a current collector and a positive active material layer disposed on the current collector. The positive active material layer includes a positive active material, a binder, and optionally a conductive material.

The current collector may be Al, but is not limited thereto.

The positive active material is the same as described above. Thus, in an embodiment of the present invention, a positive electrode comprising the positive active material of the present invention or a positive active material as produced by the process of the present invention is provided. In an embodiment, the active mass density of the positive electrode is from 1.5 to 3.5 g/cc.

The binder improves binding properties of positive active material particles with one another and with a current collector and specific examples may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any electrically conductive material may be used as a conductive material, unless it causes a chemical change, and examples thereof may be one or more of natural graphite, artificial graphite, carbon black, acetylene black, ketjen black, a carbon fiber, a metal powder, or a metal fiber of copper, nickel, aluminum, silver, and the like, and a conductive material such as a polyphenylene derivative and the like.

In a preferred embodiment, the positive electrode may have an active mass density of 1.5 to 3.0 g/cc and specifically 1.8 to 2.6 g/cc. When the positive electrode has an active mass density within the range, lithium ions are more actively diffused and decreases internal resistance of a positive electrode and may further improve high power characteristics of a rechargeable lithium battery.

The active mass density is measured by cutting an electrode plate into a disk having a diameter of 5 cm and measuring its thickness and weight. Subsequently, the active mass density is calculated by subtracting the weight and thickness of a current collector from the thickness and weight of the disk and using volume and weight of a positive active material layer.

The negative electrode 112 includes a current collector and a negative active material layer disposed on the negative current collector.

The negative current collector may be a copper foil.

The negative active material layer may include a negative active material, a binder, and optionally a conductive material.

The negative active material may include a material that reversibly intercalates/deintercalates lithium ions, a lithium metal, a lithium metal alloy, material being capable of doping and dedoping lithium, or a transition metal oxide.

The material that reversibly intercalates/deintercalates lithium ions may be a carbon material which may be any generally-used carbon-based negative active material in a lithium ion rechargeable battery, and examples thereof may be crystalline carbon, amorphous carbon, or mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, and Sn.

The material being capable of doping and dedoping lithium may be Si, $SiO_x$ (0 < x < 2), a Si-C composite, a Si-Q alloy (wherein Q is an alkali metal, an alkaline-earth metal, Group 13 to 16 elements, a transition metal, a rare earth element, or a combination thereof, and not Si), Sn, $SnO_2$, a Sn-C composite, Sn-R (wherein R is an alkali metal, an alkaline-earth metal, Group 13 to 16 elements, a transition metal, a rare earth element, or a combination thereof, and not Sn), and the like, and at least one of these may be mixed with $SiO_2$. Specific elements of the Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may be vanadium oxide, lithium vanadium oxide, and the like.

When the amorphous carbon such as soft carbon or hard carbon, a mesophase pitch carbonized product, fired coke, and the like among the negative active materials is used, lithium ions are absorbed/desorbed inside a pore and not extracted during charge and discharge with high power and thus, may further improve cycle-life characteristics.

The binder improves binding properties of negative active material particles with one another and with a current collector, and examples thereof may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The conductive material improves conductivity of an electrode. Any electrically conductive material may be used as a conductive material, unless it causes a chemical change, and examples thereof may be natural graphite, artificial graphite, carbon black, acetylene black, ketjen black, carbon fiber and the like carbon-based material; copper, nickel, aluminum, silver, and the like metal powder or metal fiber and the like metal-based material; polyphenylene derivative and the like conductive polymer; or a mixture thereof.

The negative and positive electrodes 112 and 114 may be manufactured in a method of mixing the active material, a conductive material, and a binder to prepare an active material composition and coating the composition on a current collector, respectively.

The electrode manufacturing method is well known, and thus is not described in detail in the present specification. The solvent includes N-methylpyrrolidone and the like, but is not limited thereto.

The electrolyte solution includes a non-aqueous organic solvent and a lithium salt.

The non-aqueous organic solvent serves as a medium for transmitting ions taking part in the electrochemical reaction of a battery. The non-aqueous organic solvent may be selected from a carbonate-based, ester-based, ether-based, ketone-based, alcohol-based, or aprotic solvent.

The carbonate-based solvent may include, for example, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like.

When the linear carbonate compounds and cyclic carbonate compounds are mixed, an organic solvent having a high dielectric constant and low viscosity can be provided. The cyclic carbonate and the linear carbonate are mixed together in a volume ratio ranging from about 1:1 to 1:9.

In addition, the ester based solvent may be, for example methylacetate, ethylacetate, n-propylacetate, dimethylacetate, methylpropionate, ethylpropionate, $\gamma$-butyrolactone, decanolide, valerolactone, mevalonolactone, caprolactone, and the like. The ether solvent may be, for example dibutylether, tetraglyme, diglyme, dimethoxyethane, 2-methyltetrahydrofuran, tetrahydrofuran, and the like, and the ketone based solvent may be cyclohexanone, and the like. In addition, the alcohol based solvent may be ethanol, isopropyl alcohol, and the like.

The non-aqueous organic solvent may be used singularly or in a mixture, and when the organic solvent is used in a mixture, the mixture ratio may be controlled in accordance with a desirable battery performance.

The non-aqueous electrolyte solution may further include an overcharge inhibitor additive such as ethylenecarbonate, pyrocarbonate, or the like.

The lithium salt is dissolved in an organic solvent, supplies lithium ions in a battery, basically operates the rechargeable lithium battery, and improves lithium ion transportation between positive and negative electrodes therein.

Specific examples of the lithium salt may be $LiPF_6$, $LiBF_4$, $LiSbF_6$, $LiAsF_6$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$, wherein, x and y are natural numbers, LiCl, LiI, $LiB(C_2O_4)_2$ (lithium bis(oxalato) borate, LiBOB), or a combination thereof.

The lithium salt may be used in a concentration ranging from about 0.1 M to about 2.0 M. When the lithium salt is included within the above concentration range, an electrolyte may have excellent performance and lithium ion mobility due to optimal electrolyte conductivity and viscosity.

The separator 113 may include any materials commonly used in the conventional lithium battery as long as separating a negative electrode 112 from a positive electrode 114 and providing a transporting passage for lithium ion. In other words, the separator 113 may have a low resistance to ion transportation and an excellent impregnation for an electrolyte. For example, it may be selected from glass fiber, polyester, TEFLON (tetrafluoroethylene), polyethylene, polypropylene, polytetrafluoroethylene (PTFE), or a combination thereof. It may have a form of a non-woven fabric or a woven fabric. For example, a polyolefin-based polymer separator such as polyethylene, polypropylene or the like is mainly used for a lithium ion battery. In order to ensure the heat resistance or mechanical strength, a coated separator including a ceramic component or a polymer material may be used. Selectively, it may have a mono-layered or multi-layered structure.

When cellulose having high permeability among the separators is used, lithium ions are not hindered from movement at a low temperature due to increased viscosity of an electrolyte solution and thus, may further improve cycle-life characteristic at the low temperature.

Hereinafter, the embodiments are illustrated in more detail with reference to examples. However, the present disclosure is illustrated in more detail with reference to examples.

Furthermore, what is not described in this disclosure may be sufficiently understood by those who have knowledge in this field and will not be illustrated here.

**(Preparation of Porous Material)**

**Preparation Example 1**

A nickel sulfate aqueous solution, a cobalt sulfate aqueous solution, and a manganese sulfate aqueous solution were mixed in an atomic ratio of 1:1:1 among Ni, Co, and Mn. Subsequently, the mixed solution and an ammonium sulfate aqueous solution as a complex agent were sequentially put in a reaction bath, and a sodium hydroxide aqueous solution was dropped therein until pH of the solution in the reaction bath became 11, obtaining nickel cobalt manganese composite hydroxide particles. The obtained particles were filtered, washed with water, and dried at 100°C, obtaining dry powder. The dry powder was mixed with lithium carbonate powder in a weight ratio of 1:1.05, and the mixture was fired at 950°C for 10 hours under an air atmosphere, preparing a porous material (NCM) including primary particles and secondary particles formed from the primary particles.

**Preparation Example 2**

A nickel sulfate aqueous solution, a cobalt sulfate aqueous solution, and an aluminum hydroxide were mixed in an atomic ratio of 80:15:5 among Ni, Co, and Al to prepare a mixed solution. Subsequently, the mixed solution and an ammonium sulfate aqueous solution as a complex agent were sequentially put in a reaction bath, and a sodium hydroxide aqueous solution was dropped therein until pH of the resulting solution in the reaction bath became 11, obtaining nickel cobalt aluminum composite hydroxide particles. The obtained particles were filtered, washed with water, and dried at 100°C, obtaining a dry powder. The dry powder was mixed with lithium carbonate powder in a weight ratio of 1:1.03, and the mixture was dried at 800°C for 10 hours under an oxygen atmosphere, preparing a porous material (NCA) including primary particles and secondary particles formed therefrom.

**Preparation Example 3**

The dry nickel cobalt manganese composite hydroxide powder according to Preparation Example 1 was mixed with lithium carbonate powder and magnesium hydroxide until the magnesium hydroxide was included in a mole ratio of 1%, and the mixture was fired at 950°C for 10 hours under the air atmosphere, preparing a porous material (NCM+Mg) including primary particles and secondary particles formed therefrom.

**Evaluation 1: Tap Density, True Density, and Particle Size of Porous Material**

The tap density, true density, and particle size of the porous materials according to Preparation Examples 1 to 3 were measured in the following method, and the results are provided in the following Table 1.

(Tap Density Measurement)

The mass (A) of a 100cc cell was measured, and the porous material specimens according to Preparation Examples 1 to 3 were naturally dropped in the cell by using a 200 mesh to charge the cell. Subsequently, the mass (B) and charge volume (D) of the cell after 200 times tapping were measured by using a device having a 4 cm spacer (Tap Denser KYT-3000, available from Seishin Enterprise Co., Ltd.), and tap density of the cell was calculated according to the following equation 1.

$$[\text{Equation 1}]$$

$$\text{Tap density (g/cc)} = (B\text{-}A) / D$$

(True Density Measurement)

The porous material specimens according to Preparation Examples 1 to 3 were injected into a container, true density of the porous materials by using Accupyc1330 pycnometer made by Shimadzu Co. according to a gas method using hydrogen, and the results are provided in the following Table 1.

(Average Particle Diameter (D50) of Primary Particles)

The average particle diameter of primary particles was measured with S4500 scanning electron microscope made by Hitachi Ltd.

(Average Particle Diameter (D50) of Secondary Particles)

LA-910 laser diffraction particle size analyzer made by Horiba International Co. was used.

[Table 1]

| | Porous material | Tap density (g/cc) | True density (g/cc) | Average particle diameter (D50) | |
|---|---|---|---|---|---|
| | | | | Primary particle (nm) | Secondary particle ($\mu$m) |
| Preparation Example 1 | NCM | 0.80 | 4.7 | 100 | 3.5 |
| Preparation Example 2 | NCA | 0.65 | 4.5 | 90 | 4.2 |
| Preparation Example 3 | NCM+Mg | 0.72 | 4.75 | 80 | 4.0 |

**(Manufacture of Positive Electrode)**

**Preparation Example 4**

90 wt% of the porous material according to Preparation Example 1, 5 wt% of polyvinylidene fluoride, and 5 wt% of acetylene black were mixed, and the mixture was dispersed into N-methylpyrrolidone, preparing a slurry. Subsequently, the slurry was coated on a 15$\mu$m-thick aluminum substrate and then, dried at 100°C and compressed, manufacturing a positive electrode having a mass density of 3.0 g/cc and a thickness of 70 $\mu$m.

**Preparation Example 5**

A positive electrode was manufacture according to the same method as Preparation Example 4 except for using the porous material according to Preparation Example 2.

**Preparation Example 6**

A positive electrode was manufacture according to the same method as Preparation Example 4 except for using the porous material according to Preparation Example 3.

**Preparation Example 7**

A positive electrode was manufactured according to the same method as Preparation Example 4 except for mixing 85 wt% of the porous material according to Preparation Example 3, 5 wt% of 10 $\mu$m activated carbon (Kuraray Co., Ltd.), 5 wt% of polyvinylidene fluoride, and 5 wt% of acetylene black.

**Preparation Example 8**

A positive electrode was manufactured according to the same method as Preparation Example 4 except for mixing 90 wt% of $LiCoO_2$ having an average particle diameter (D50) of 5 $\mu$m, tap density of 2.5 g/cc, and true density of 5.0 g/cc, 5 wt% of polyvinylidene fluoride, and 5 wt% of acetylene black.

**(Manufacture of Negative Electrode)**

**Preparation Example 9**

85 wt% of 8 $\mu$m graphite (Mitsubishi Chemical Co.), 10 wt% of polyvinylidene fluoride, and 5 wt% of acetylene black were mixed, and the mixture was dispersed into N-methylpyrrolidone, preparing slurry. Subsequently, the slurry was coated on a 10 $\mu$m-thick copper substrate and then, dried at 100°C and compressed, manufacturing a negative electrode having a mass density of 1.4 g/cc and a thickness of 90$\mu$m.

**Preparation Example 10**

A phenolic resin was cured and fired at 1200°C under an inert atmosphere, obtaining a solid. The solid was ground to have an average particle diameter (D50) of 10$\mu$m with a ball mill, obtaining hard carbon.

85 wt% of the hard carbon, 10 wt% of polyvinylidene fluoride, and 5 wt% of acetylene black were mixed, and the mixture was dispersed into N-methylpyrrolidone, preparing a slurry. Subsequently, the slurry was coated on a 10 $\mu$m-thick copper substrate and then, dried at 100°C and compressed, manufacturing a negative electrode having a mass density of 1.2 g/cc and a thickness of 100 $\mu$m.

**(Manufacture of Rechargeable Lithium Battery Cell)**

**Example 1**

The positive electrode according to Preparation Example 4 and the negative electrode according to Preparation Example 9 and a separator interposed between the positive and negative electrodes were used to manufacture a jelly-roll, the jelly-roll was inserted into a 18650-sized case, and an electrolyte solution was injected therein, manufacturing a rechargeable lithium battery cell.

Herein, the electrolyte solution was prepared by mixing ethylenecarbonate (EC) and ethylmethylcarbonate (EMC) in a volume ratio of 3:7 and dissolving 1.0M LiPF$_6$ in the mixed solution, and the separator was a polyethylene porous film.

**Example 2**

A rechargeable lithium battery cell was manufactured according to the same method as Example 1 except for using the positive electrode according to Preparation Example 5.

**Example 3**

A rechargeable lithium battery cell was manufactured according to the same method as Example 1 except for using the positive electrode according to Preparation Example 6.

**Example 4**

A rechargeable lithium battery cell was manufactured according to the same method as Example 1 except for using the positive electrode according to Preparation Example 7.

**Example 5**

A rechargeable lithium battery cell was manufactured according to the same method as Example 1 except for using the positive electrode according to Preparation Example 7 and the negative electrode according to Preparation Example 10.

**Example 6**

A rechargeable lithium battery cell was manufactured according to the same method as Example 5 except for using a non-woven fabric cellulose separator in Example 5.

**Comparative Example 1**

A rechargeable lithium battery cell was manufactured according to the same method as Example 1 except for using the positive electrode according to Preparation Example 8 and the negative electrode according to Preparation Example 9.

**Comparative Example 2**

A rechargeable lithium battery cell was manufactured according to the same method as Example 1 except for using the positive electrode according to Preparation Example 8 and the negative electrode according to Preparation Example 10.

**Comparative Example 3**

A rechargeable lithium battery cell was manufactured according to the same method as Comparative Example 2 except for using a cellulose non-woven fabric separator in Comparative Example 2.

**Evaluation 2: Characteristics of Rechargeable Lithium Battery Cell**

The rechargeable lithium battery cells according to Examples 1 to 6 and Comparative Examples 1 to 3 were constant current-charged with a current of 1.5A, and the charge was ended at a battery voltage of 4.2V. In addition, the rechargeable lithium battery cells were constant current-discharged with a current of 1.5A, and the discharge was ended at a battery voltage of 2.0V. The discharge capacity at this point was regarded as initial capacity.

Subsequently, the rechargeable lithium battery cells were constant current-charged with a current of 1.5A and discharged at a current of 15A to 2.0V after ending the charge at a cell voltage of 4.2V, and then, high rate discharge capacity of the rechargeable lithium battery cells was measured to evaluate high rate discharge characteristics. Capacity retention (%) of the rechargeable lithium battery cells during high rate discharge was obtained as a percentage of high rate discharge capacity relative to initial capacity in the following Table 2.

High rate discharge characteristics of the rechargeable lithium battery cells were evaluated. In addition, high rate charge capacity of the rechargeable lithium battery cells was measured to evaluate high-rate charge characteristics by fully discharging the rechargeable lithium battery cells and constant current-charging them with a current of 15A and then, ending the charge at a battery voltage of 4.2V. Capacity retention (%) of the rechargeable lithium battery cells was obtained as a percentage of high rate charge capacity relative to initial capacity during the high rate charge in the following Table 2.

On the other hand, the rechargeable lithium battery cells were constant current-charged at room temperature with a current of 1.5A and full-charged at a cell voltage of 4.2V and then, discharged to 2.0V with a current of 1.5A under an atmosphere set at -20°C, and low temperature characteristics of the rechargeable lithium battery cells were evaluated by comparing low temperature discharge capacity with initial capacity. In the following Table 2, capacity retention (%) at a low temperature was obtained as a percentage of low temperature discharge capacity relative to initial capacity.

In addition, the rechargeable lithium battery cells were 1000 times repetitively charged with a constant current of 6A to 4.2V and discharged with a constant current of 6A to 2.0V, and capacity retention (%) was obtained as a percentage of discharge capacity at the 1000th cycle relative to initial capacity to evaluate cycle-life characteristic.

[Table 2]

| | Positive electrode | Negative electrode | Separator | Capacity retention at high rate discharge (%) | Capacity retention at high rate charge (%) | Capacity retention at low temp. (%) | Capacity retention after 1000 cycles (%) |
|---|---|---|---|---|---|---|---|
| Example 1 | Preparation Example 4 | Preparation Example 9 | Polyethylene | 80 | 72 | 72 | 73 |
| Example 2 | Preparation Example 5 | Preparation Example 9 | Polyethylene | 82 | 75 | 78 | 71 |
| Example 3 | Preparation Example 6 | Preparation Example 9 | Polyethylene | 84 | 74 | 75 | 77 |
| Example 4 | Preparation Example 7 | Preparation Example 9 | Polyethylene | 84 | 88 | 82 | 82 |
| Example 5 | Preparation Example 7 | Preparation Example 10 | Polyethylene | 84 | 88 | 82 | 86 |
| Example 6 | Preparation Example 7 | Preparation Example 10 | Cellulose | 88 | 90 | 88 | 86 |
| Comparative Example 1 | Preparation Example 8 | Preparation Example 9 | Polyethylene | 48 | 23 | 53 | 58 |
| Comparative Example 2 | Preparation Example 8 | Preparation Example 10 | Polyethylene | 51 | 46 | 55 | 63 |
| Comparative Example 3 | Preparation Example 8 | Preparation Example 10 | cellulose | 55 | 48 | 58 | 65 |

Referring to Table 2, the rechargeable lithium battery cells using a porous material having a tap density within an appropriate range as a positive active material according to Examples 1 to 6 showed excellent high power characteristic and low temperature cycle-life characteristics at the high power compared with the rechargeable lithium battery cells using a positive active material having a tap density out of the appropriate range according to Comparative Examples 1 to 3.

While this disclosure has been described in connection with what is presently considered to be practical embodiments, it is to be understood that the invention is not limited to the disclosed embodiments, but, on the contrary, is intended to cover various modifications and equivalent arrangements included within the scope of the appended claims.

**Claims**

1. A positive active material for a rechargeable lithium battery including a porous material having a tap density of greater than or equal to 0.3 g/cc and less than 1.0 g/cc, wherein the porous material comprises primary particles and secondary particles, wherein each secondary particle comprises aggregated primary particles, optionally the tap density is greater than or equal to 0.45 g/cc and less than 0.95 g/cc and optionally greater than or equal to 0.55 g/cc and less than 0.90 g/cc, **characterised by** the porous material has a ratio of tap density relative to a true density less than or equal to 1/5, wherein the tap density is measured according to the method as defined in the description, and wherein the true density is measured according to the method as defined in the description.

2. The positive active material of claim 1, wherein the porous material includes at least one selected from a compound represented by the following Chemical Formulae 1 to 3:

    [Chemical Formula 1]        $LiMn_{2-x}M^1_xO_4$

    (in Chemical Formula 1, $M^1$ is Mg, Na, Ca, Sr, Ti, Al, Co, Ni, Fe, Cu, Si, Sn, or a combination thereof, and $0 \leq x < 2$)

    [Chemical Formula 2]        $LiNi_aCo_bMn_cM^2_dO_4$

    (in Chemical Formula 2, $M^2$ is Mg, Na, Ca, Sr, Ti, Al, Fe, Cu, Si, Sn, or a combination thereof, $0<a<1$, $0<b<1$, $0<c<1$, $0 \leq d < 1$, and $a+b+c+d=1$)

    [Chemical Formula 3]        $LiNi_eCo_fAl_gM^3_hO_4$

    (in Chemical Formula 3, $M^3$ is Mg, Na, Ca, Sr, Ti, Mn, Fe, Cu, Si, Sn, or a combination thereof, $0<e<1$, $0<f<1$, $0<g<1$, $0 \leq h < 1$, and $e+f+g+h=1$).

3. The positive active material of claim 1 or claim 2, wherein an average particle diameter (D50) of the primary particle is from 50 to 300 nm, optionally from 60 to 200 nm and optionally from 70 to 150 nm.

4. The positive active material of any of claims 1 to 3, wherein an average particle diameter (D50) of the secondary particle is from 2.0 to 7.0 $\mu$m, optionally from 2.5 to 5.5 $\mu$m and optionally from 3.0 to 4.5 $\mu$m.

5. The positive active material of any of claims 1 to 4, wherein the porous material has a ratio of tap density relative to a true density of between 1/8 and 1/5.

6. The positive active material of any of claims 1 to 5 further comprising activated carbon.

7. A process for preparing the positive active material of any of claims 1 to 6 comprising mixing a metal raw material and a hydroxide salt to prepare a mixed solution, obtaining composite hydroxide particles from the mixed solution, mixing the particles with a lithium raw material, and heat-treating the mixture.

8. The process of claim 7, wherein the weight ratio of composite hydroxide particles and lithium raw material is 1:1.01 to 1:1.10 and optionally 1:1.02 to 1:1.06.

9. The process of claim 7 or claim 8, wherein the hydroxide salt is ammonium hydroxide ($NH_4OH$) or sodium hydroxide (NaOH).

10. The process of any of claims 7 to 9, wherein the metal raw material is a metal-containing acetate, nitrate, hydroxide, oxide or sulfate or combinations of these.

11. The process of any of claims 7 to 10, wherein the lithium raw material may be lithium carbonate, lithium acetate or lithium hydroxide.

12. The process of any of claims 7 to 11, wherein the heat treatment is performed at 600 to 1000°C, optionally for 800 to 1000°C, and optionally for 900 to 1000°C.

13. The process of any of claims 7 to 12, wherein the heat treatment step is carried out for between 8 and 13 hours, optionally between 9 and 11 hours.

14. A positive electrode comprising the positive active material of any of claims 1 to 6.

15. The positive electrode of claim 14, wherein the active mass density of the positive electrode is from 1.5 to 3.5 g/cc, the active mass density is calculated by cutting an electrode plate into a disk having a diameter of 5 cm and measuring its thickness and weight and subtracting the weight and thickness of a current collector from the thickness and weight of the disk and then using the volume and weight of a positive active material layer.


**Patentansprüche**

1. Positives Aktivmaterial für eine wiederaufladbare Lithiumbatterie, umfassend ein poröses Material mit einer Klopfdichte von größer als oder gleich $0,3$ g/cm$^3$ und kleiner als $1,0$ g/cm$^3$, wobei das poröse Material Primärpartikel und Sekundärpartikel umfasst, wobei jedes Sekundärpartikel aggregierte Primärpartikel umfasst, die Klopfdichte gegebenenfalls größer als oder gleich $0,45$ g/cm$^3$ und kleiner als $0,95$ g/cm$^3$ und gegebenenfalls größer als oder gleich $0,55$ g/cm$^3$ und kleiner als $0,90$ g/cm$^3$ ist, **gekennzeichnet dadurch, dass** das poröse Material ein Verhältnis der Klopfdichte bezüglich einer wahren Dichte kleiner als oder gleich 1/5 aufweist, wobei die Klopfdichte gemäß der Methode, wie in der Beschreibung definiert, gemessen wird.

2. Positives Aktivmaterial nach Anspruch 1, wobei das poröse Material mindestens eines, ausgewählt aus einer durch die folgenden chemischen Formeln 1 bis 3 dargestellten Verbindung, umfasst:

$$[\text{Chemische Formel 1}] \qquad LiMn_{2-x}M^1_xO_4$$

(in der chemischen Formel 1 ist M$^1$ Mg, Na, Ca, Sr, Ti, Al, Co, Ni, Fe, Cu, Si, Sn, oder eine Kombination davon, und $0 \leq x < 2$)

$$[\text{Chemische Formel 2}] \qquad LiNi_aCo_bMn_cM^2_dO_4$$

(in der chemischen Formel 2 ist M$^2$ Mg, Na, Ca, Sr, Ti, Al, Fe, Cu, Si, Sn, oder eine Kombination davon, $0 < a < 1$, $0 < b < 1$, $0 < c < 1$, $0 \leq d < 1$, und $a + b + c + d = 1$)

$$[\text{Chemische Formel 3}] \qquad LiNi_eCo_fAl_gM^3_hO_4$$

(in der chemischen Formel 3 ist M$^3$ Mg, Na, Ca, Sr, Ti, Mn, Fe, Cu, Si, Sn, oder eine Kombination davon, $0 < e < 1$, $0 < f < 1$, $0 < g < 1$, $0 \leq h < 1$, und $e + f + g + h = 1$).

3. Positives Aktivmaterial nach Anspruch 1 oder Anspruch 2, wobei ein mittlerer Teilchendurchmesser (D50) des Primärpartikels von 50 bis 300 nm, gegebenenfalls von 60 bis 200 nm und gegebenenfalls von 70 bis 150 nm beträgt.

4. Positives Aktivmaterial nach einem der Ansprüche 1 bis 3, wobei ein mittlerer Teilchendurchmesser (D50) des Sekundärpartikels von 2,0 bis 7,0 $\mu$m, gegebenenfalls von 2,5 bis 5,5 $\mu$m und gegebenenfalls von 3,0 bis 4,5 $\mu$m beträgt.

5. Positives Aktivmaterial nach einem der Ansprüche 1 bis 4, wobei das poröse Material ein Verhältnis der Klopfdichte bezüglich einer wahren Dichte von zwischen 1/8 und 1/5 aufweist.

6. Positives Aktivmaterial nach einem der Ansprüche 1 bis 5, weiterhin umfassend Aktivkohle.

7. Verfahren zur Herstellung des positiven Aktivmaterials nach einem der Ansprüche 1 bis 6, umfassend Mischen eines Ausgangsmaterials für Metall und eines Hydroxidsalzes, um eine gemischte Lösung herzustellen, Erhalten von Mischhydroxidpartikeln aus der gemischten Lösung, Mischen der Partikel mit einem Ausgangsmaterial für Lithium, und Wärmebehandeln des Gemisches.

8. Verfahren nach Anspruch 7, wobei das Gewichtsverhältnis der Mischhydroxidpartikel und des Ausgangsmaterials für Lithium 1:1,01 bis 1:1,10 und gegebenenfalls 1:1,02 bis 1:1,06 beträgt.

9. Verfahren nach Anspruch 7 oder Anspruch 8, wobei das Hydroxidsalz Ammoniumhydroxid ($NH_4OH$) oder Natrium-hydroxid (NaOH) ist.

10. Verfahren nach einem der Ansprüche 7 bis 9, wobei das Ausgangsmaterial für Metall ein metallhaltiges Acetat, Nitrat, Hydroxid, Oxid oder Sulfat oder Kombinationen von diesen ist.

11. Verfahren nach einem der Ansprüche 7 bis 10, wobei das Ausgangsmaterial für Lithium Lithiumcarbonat, Lithiumacetat oder Lithiumhydroxid sein kann.

12. Verfahren nach einem der Ansprüche 7 bis 11, wobei die Wärmebehandlung bei 600 bis 1000 °C, gegebenenfalls bei 800 bis 1000 °C, und gegebenenfalls bei 900 bis 1000 °C durchgeführt wird.

13. Verfahren nach einem der Ansprüche 7 bis 12, wobei der Wärmebehandlungsschritt zwischen 8 und 13 Stunden, gegebenenfalls zwischen 9 und 11 Stunden durchgeführt wird.

14. Positive Elektrode, umfassend das positive Aktivmaterial nach einem der Ansprüche 1 bis 6.

15. Positive Elektrode nach Anspruch 14, wobei die Dichte der Aktivmasse der positiven Elektrode von 1,5 bis 3,5 $g/cm^3$ beträgt, wobei die Dichte der Aktivmasse berechnet wird durch Schneiden einer Elektrodenplatte zu einer Scheibe mit einem Durchmesser von 5 cm und Messen ihrer Dicke und ihres Gewichts und Subtrahieren des Gewichts und der Dicke eines Stromkollektors von der Dicke und dem Gewicht der Scheibe und anschließendes Verwenden des Volumens und des Gewichts einer Schicht des positiven Aktivmaterials.

## Revendications

1. Matériau actif d'électrode positive pour une batterie rechargeable au lithium comprenant un matériau poreux ayant une masse volumique après tassement supérieure ou égale à 0,3 $g/cm^3$ et inférieure à 1,0 $g/cm^3$, où le matériau poreux comprend des particules primaires et des particules secondaires, où chaque particule secondaire comprend des particules primaires agrégées, éventuellement la masse volumique après tassement est supérieure ou égale à 0,45 $g/cm^3$ et inférieure à 0,95 $g/cm^3$, et éventuellement supérieure ou égale à 0,55 $g/cm^3$ et inférieure à 0,90 $g/cm^3$, **caractérisé en ce que** le matériau poreux a un rapport de la masse volumique après tassement à la masse volumique réelle inférieur ou égal à 1/5, où la masse volumique après tassement est mesurée conformément au procédé tel que défini dans la description, et où la masse volumique réelle est mesurée conformément au procédé tel que défini dans la description.

2. Matériau actif d'électrode positive selon la revendication 1, dans lequel le matériau poreux comprend au moins l'un choisi parmi les composés représentés par les formules chimiques 1 à 3 qui suivent :

[Formule chimique 1]  $LiMn_{2-x}M^1_xO_4$

(dans la formule chimique 1, $M^1$ est Mg, Na, Ca, Sr, Ti, Al, Co, Ni, Fe, Cu, Si, Sn ou une de leurs combinaisons, et $0 \leq x < 2$)

[Formule chimique 2]  $LiNi_aCo_bMn_cM^2_dO_4$

(dans la formule chimique 2, $M^2$ est Mg, Na, Ca, Sr, Ti, Al, Fe, Cu, Si, Sn ou une de leurs combinaisons, $0 < a < 1$, $0 < b < 1$, $0 < c < 1$, $0 \leq d < 1$, et a+b+c+d = 1)

[Formule chimique 3]  $LiNi_eCo_fAl_gM^3_hO_4$

(dans la formule chimique 3, $M^3$ est Mg, Na, Ca, Sr, Ti, Mn, Fe, Cu, Si, Sn ou une de leurs combinaisons, $0 < e < 1$, $0 < f < 1$, $0 < g < 1$, $0 \leq h < 1$, et $e+f+g+h = 1$).

3. Matériau actif d'électrode positive selon la revendication 1 ou la revendication 2, dans lequel la granulométrie moyenne (D50) de la particule primaire est de 50 à 300 nm, éventuellement de 60 à 200 nm et éventuellement de 70 à 150 nm.

4. Matériau actif d'électrode positive selon l'une quelconque des revendications 1 à 3, dans lequel la granulométrie moyenne (D50) de la particule secondaire est de 2,0 à 7,0 $\mu$m, éventuellement de 2,5 à 5,5 $\mu$m et éventuellement de 3,0 à 4,5 $\mu$m.

5. Matériau actif d'électrode positive selon l'une quelconque des revendications 1 à 4, dans lequel le matériau poreux a un rapport de la masse volumique après tassement à la masse volumique réelle compris entre 1/8 et 1/5.

6. Matériau actif d'électrode positive selon l'une quelconque des revendications 1 à 5, comprenant en outre du charbon activé.

7. Procédé pour préparer le matériau actif d'électrode positive de l'une quelconque des revendications 1 à 6, comprenant le mélange d'une matière première métallique et d'un sel hydroxyde pour préparer une solution mixte, l'obtention de particules d'hydroxyde composites à partir de la solution mixte, le mélange des particules avec une matière première au lithium, et le traitement à la chaleur du mélange.

8. Procédé selon la revendication 7, dans lequel le rapport en poids des particules d'hydroxyde composites et de la matière première au lithium est de 1/1,01 à 1/1,10 et éventuellement de 1/1,02 à 1/1,06.

9. Procédé selon la revendication 7 ou 8, dans lequel le sel hydroxyde est l'hydroxyde d'ammonium ($NH_4OH$) ou l'hydroxyde de sodium (NaOH).

10. Procédé selon l'une quelconque des revendications 7 à 9, dans lequel la matière première métallique est un acétate, nitrate, hydroxyde, oxyde ou sulfate contenant un métal, ou des combinaisons de ceux-ci.

11. Procédé selon l'une quelconque des revendications 7 à 10, dans lequel la matière première au lithium peut être le carbonate de lithium, l'acétate de lithium ou l'hydroxyde de lithium.

12. Procédé selon l'une quelconque des revendications 7 à 11, dans lequel le traitement à la chaleur est effectué à une température de 600 à 1 000°C, éventuellement de 800 à 1 000°C, et éventuellement de 900 à 1 000°C.

13. Procédé selon l'une quelconque des revendications 7 à 12, dans lequel l'étape de traitement à la chaleur est effectuée pendant 8 à 13 heures, éventuellement 9 à 11 heures.

14. Electrode positive comprenant le matériau actif d'électrode positive de l'une quelconque des revendications 1 à 6.

15. Electrode positive selon la revendication 14, où la masse volumique de la masse active de l'électrode positive est de 1,5 à 3,5 g/cm$^3$, où la masse volumique de la masse active est calculée par découpage de la plaque d'électrode sous la forme d'un disque ayant un diamètre de 5 cm, et mesure de son épaisseur et de son poids et soustraction du poids et de l'épaisseur d'un collecteur de courant de l'épaisseur et du poids du disque, puis utilisation du volume et du poids d'une couche de matériau actif d'électrode positive.

# FIG.1

**EP 2 827 410 B1**